# EUROPÄISCHE PATENTSCHRIFT

(11) **EP 3 418 709 B1**
(45) Veröffentlichungstag und Bekanntmachung des Hinweises auf die Patenterteilung: **19.08.2020**
(21) Anmeldenummer: 18178949.6
(22) Anmeldetag: 21.06.2018
(51) Int. Cl.: G01M 3/22, B07C 5/34

(54) **VERFAHREN UND VORRICHTUNG ZUR LECK-DETEKTION IN DRUCKBEHÄLTERN**
METHOD AND DEVICE FOR LEAK DETECTION IN PRESSURE CONTAINERS
PROCÉDÉ ET DISPOSITIF DE DÉTECTION DE FUITE DANS DES RÉCIPIENTS SOUS PRESSION

(30) Priorität: 21.06.2017 DE 102017005842
(43) Veröffentlichungstag der Anmeldung: 26.12.2018
(73) Patentinhaber: Heuft Systemtechnik GmbH, 56659 Burgbrohl (DE)
(72) Erfinder: Heuft, Bernhard, 56659 Burgbrohl (DE)
(74) Vertreter: Gritschneder, Sebastian

(56) Entgegenhaltungen:
- WO-A1-2016/016661
- WO-A2-2006/009442
- FR-A- 1 487 835

## Beschreibung

Die vorliegende Anmeldung betrifft eine Vorrichtung und ein Verfahren zur Detektion von Leckagen in verschlossenen Druckbehältern, die auf einer Transportvorrichtung zum Beispiel in einer Abfüll- und Verpackungsanlage der Getränke-, Lebensmittel- oder Pharmaindustrie befördert werden.

Leckagen in Druckbehältern, wie zum Beispiel in Spraydosen, stellen nicht nur ein Kriterium für mangelnde Qualität des Produktes dar, sondern können auch zur Entwicklung einer explosionsfähigen Atmosphäre führen, wodurch die Sicherheit der Anlage und insbesondere des Bedienpersonals gefährdet ist.

In herkömmlichen Inspektionseinrichtungen zur Identifizierung von Leckagen in Druckbehältern werden die zu untersuchenden Druckbehälter unter einem U-förmigen Messbogen durchgeführt, der permanent die sich um die Behälter entwickelnde Atmosphäre absaugt und analysiert. Solche sogenannten Sniffer-Inspektoren erlauben zwar einen hohen Produktdurchsatz, haben aber nur eine begrenzte Empfindlichkeit, da eventuell austretendes Medium immer sofort mit der gesamten umgebenden Atmosphäre vermischt wird. Kleine Lecks können mit solchen Sniffer-Inspektoren unter Umständen nicht zuverlässig erkannt werden.

Vorrichtungen zur Detektion von kleinen Leckagen sind in der Verpackungsindustrie grundsätzlich bereits bekannt. Die WO 2006/009442 A1 betrifft zum Beispiel eine Vorrichtung zur Leckprüfung von luftdicht verpackten und mit einer speziellen Schutzatmosphäre versehenen Produkten. Hierzu werden die Produkte auf einem Transportband kontinuierlich zu einer Leckdetektionsvorrichtung gefördert. Zur Leckdetektion wird ein Gehäuse über das sich auf der Transportvorrichtung befindende Produkt gestülpt. Zwischen dem Gehäuse und der Transportvorrichtung sind Dichtungen vorgesehen, die den Innenraum des Gehäuses luftdicht abschließen. Mittels einer Pumpe wird der Innenraum des Gehäuses evakuiert. Die verbleibende Gaskonzentration in dem Gehäuse wird anschließend mittels IR-Absorption bestimmt. Überschreitet die Gaskonzentration einen vorgegebenen Schwellwert, lässt dies auf das Vorhandensein einer Leckage in der Produktverpackung schließen.

Neben der Gaskonzentration wird oftmals auch eine massenspektroskopische Analyse des sich in dem Gehäuse befindenden Restgasvolumens durchgeführt. Eine solche Vorrichtung ist zum Beispiel aus der WO 2011/012730 A1 bekannt.

Eine Inspektionsvorrichtung und ein Inspektionsverfahren welche die Merkmale des einleitenden Teils der Ansprüche 1 und 13 offenbart ist aus WO 2016016661 A1 bekannt.

Nachteilig bei den oben diskutierten Vorrichtungen ist, dass diese nur bei relativ langsamen Fördergeschwindigkeiten einsetzbar sind, da einerseits die luftdichte Positionierung des Gehäuses und andererseits die Evakuierung des Testvolumens jeweils eine gewisse Zeit beanspruchen. In heutigen Abfüll- und Verpackungsanlagen werden die Behälter aber mit Geschwindigkeiten von bis zu 60000 Behältern pro Stunde transportiert, so dass die für die Leckdetektion pro Behälter zur Verfügung stehende Zeit für die bekannten Verfahren nicht ausreichend ist.

Aufgabe der vorliegenden Erfindung ist es daher, eine Vorrichtung und ein Verfahren bereitzustellen, bei dem Leckagen von Druckbehältern zuverlässig detektiert werden, und bei dem gleichzeitig ein Behälterdurchsatz von bis zu 60000 Behältern pro Stunde gewährleistet ist.

Gelöst wird diese Aufgabe bei der Inspektionsvorrichtung der eingangs genannten Art durch die Merkmale gemäß Anspruch 1. Die Inspektionsvorrichtung zum Detektieren von Leckagen von Druckbehältern umfasst eine umlaufende Transporteinrichtung, auf der die Behälter durch die Inspektionsvorrichtung transportiert werden, und eine Vorrichtung zur Erzeugung mindestens eines Hohlraumes, in dem ein Behälter während des Transports auf der umlaufenden Transporteinrichtung durch zumindest einen Bereich der Inspektionsvorrichtung aufgenommen ist. Mit einer Absaugeinrichtung wird zumindest ein Teil des sich in dem Hohlraum ausbildenden Gasgemisches abgesaugt. Das Gasgemisch wird einer Analyseeinrichtung zur Auswertung zugeführt. Die Vorrichtung zur Erzeugung des mindestens einen Hohlraumes, umfasst dabei eine umlaufende Hohlraumbildungseinrichtung, mit der zumindest ein Teil der Seitenwand des Hohlraumes gebildet wird. Die umlaufende Hohlraumbildungseinrichtung verläuft dabei parallel zur umlaufenden Transporteinrichtung, auf der die zu untersuchenden Behälter transportiert werden, so dass der mindestens eine Hohlraum um den zu untersuchenden Behälter herum gebildet wird, während der Druckbehälter auf dem normalen Transportweg der Transporteinrichtung durch die Inspektionsvorrichtung transportiert wird. Der Lecktest kann dabei also während des normalen Transports der Objekte durchgeführt werden, ohne dass die Geschwindigkeit der Transporteinrichtung reduziert werden muss.

Der Hohlraum wird dabei im Wesentlichen von einem Boden, zwei oder mehreren Seitenwänden, die gemeinsam den Behälter vollumfänglich umschließen und von einem Abdeckelement gebildet. Der Hohlraum muss den Behälter dabei nicht luftdicht von der Umgebung abschließen. Aufgabe der Hohlräume ist es vielmehr, den Luftaustausch mit der umgebenden Atmosphäre zu reduzieren. Je weniger Luftaustausch jedoch zwischen dem Hohlraum und der Umgebung stattfindet, desto besser/schneller kann sich aus dem Behälter austretendes Medium in dem Hohlraum aufkonzentrieren und desto höher wird die Empfindlichkeit der Leckdetektion. Auf diese Weise können auch noch sehr kleine Lecks, die mit herkömmlichen Vorrichtungen nicht detektiert werden können, festgestellt werden.

Der Boden des Hohlraums wird vorteilhafterweise von der Transportoberfläche des Transporteurs gebildet, auf dem der zu untersuchende Behälter im Bereich der Inspektionsvorrichtung transportiert wird. Vorteilhafterweise werden hierbei solche Transporteure eingesetzt, die eine möglichst geschlossene Transportoberfläche zur Verfügung stellen und dadurch den Luftaustausch durch den Boden des Hohlraums mit der Umgebung minimieren.

Die obere Begrenzung des Hohlraums wird vorzugsweise von einem stationären Abdeckelement gebildet. Das Abdeckelement erstreckt sich vorzugsweise entlang der gesamten Vorrichtung zur Erzeugung des Hohlraums. Das Abdeckelement kann zum Beispiel ein Abdeckblech oder eine Abdeckplatte sein.

Unter Verwendung der umlaufenden Hohlraumbildungseinrichtung werden die Seitenwände des mindestens einen Hohlraums gebildet. Die Seitenwände bestehen aus zwei oder mehr einzelnen Elementen, die temporär so miteinander in Eingriff gebracht werden, dass sie den jeweiligen Behälter vollständig umschließen. Die Seitenwände bilden zusammen mit der Transportoberfläche des Transporteurs und dem stationären Abdeckelement temporäre Hohlräume, in denen die zu untersuchenden Behälter für eine vorbestimmte Zeit während des Transports eingeschlossen sind. Während der Aufenthaltsdauer eines Behälters in einem Hohlraum kann sich eventuell austretendes Medium wie Treibgas im Hohlrauminneren aufkonzentrieren. Bevor der zu untersuchende Behälter wieder freigegeben wird, wird die in dem Hohlraum gebildete Atmosphäre zumindest teilweise abgesaugt und in einer Analysevorrichtung untersucht.

Ein wesentlicher Grundgedanke der vorliegenden Erfindung liegt darin, dass der Hohlraum modular aus mehreren Wandelementen aufgebaut wird, und dabei insbesondere zumindest ein Teil der Wandelemente, die die Seitenwände bilden, parallel zu den Behältern mitbewegt werden. Dadurch wird erreicht, dass die einzelnen Hohlräume selbst bei hohen Transportgeschwindigkeiten zuverlässig um die Behälter herum erzeugt werden können, ohne dass dabei die Gefahr besteht, dass die einzelnen Behälter verschoben oder umgestoßen werden.

Die Inspektion der Behälter kann dabei während des normalen Behältertransports erfolgen. Es ist weder notwendig, die Behälter vom ursprünglichen Transportweg abzulenken, noch ist es notwendig, die Transportgeschwindigkeit oder Transportrichtung zu ändern, um die Inspektion durchzuführen. Durch die umlaufende Hohlraumbildungseinrichtung werden die Hohlräume während des regulären Transports der Behälter um die Behälter herum gebildet und mit den zu untersuchenden Behältern mitbewegt. Dadurch wird die Empfindlichkeit der Leckdetektion erhöht, ohne dass weitergehende Anforderungen an die Behälterflusssteuerung gestellt werden. Mit der vorliegenden Erfindung kann also auch bei den heutzutage in Abfüllanlagen üblichen Produktdurchsätzen eine ausreichende Sensitivität der Leckdetektion sichergestellt werden, so dass die Vorrichtung auch den gesteigerten Anforderungen heutiger Abfüllanlagen gerecht wird. Die mit der vorliegenden Erfindung erzielbaren Vorteile können mit herkömmlichen Anlagen nicht erreicht werden.

In einer Ausführungsform umfasst die umlaufende Hohlraumbildungseinrichtung ein umlaufendes Band, welches an einer Seite des Transporteurs senkrecht zur Transportebene vorgesehen ist. Das umlaufende Band wird über zwei Umlenkrollen parallel zur Transportrichtung geführt und mit derselben Geschwindigkeit wie der Transporteur bewegt. An dem umlaufenden Band sind Hohlraumelemente angebracht, die am stromaufwärts gelegenen Ende über die Transportoberfläche des Transporteurs verschwenkt werden und dabei jeweils die vordere bzw. die hintere Seitenwand eines Hohlraums bilden. Die Hohlraumelemente können dabei sehr einfach ausgeführt sein und im Wesentlichen plattenförmige Unterteilungssegmente sein, die sich senkrecht von dem umlaufenden Band erstrecken. Zur Bildung der Hohlräume sind die Unterteilungssegmente vorzugsweise auch senkrecht zur Transportebene orientiert. Das umlaufende Band selbst kann aus luftundurchlässigem Material gebildet sein und damit gleichzeitig die erste laterale Hohlraum-Seitenwand bilden. Auf der dem umlaufenden Band gegenüberliegenden Seite des Transporteurs kann die zweite laterale Hohlraum-Seitenwand von einem stationären Begrenzungselement, zum Beispiel einem Begrenzungsblech, gebildet werden. Anstatt eines stationären Begrenzungselements kann auch ein zweites umlaufendes Band vorgesehen sein.

Die auf dem umlaufenden Band angeordneten Hohlraumelemente sind so dimensioniert, dass diese sich gerade bis zu dem Begrenzungselement an der gegenüberliegenden Seite des Transporteurs erstrecken. Die Hohlraumelemente fungieren damit jeweils als die vordere bzw. die hintere Seitenwände, die zusammen mit dem umlaufenden Band und dem Begrenzungselement die temporären Hohlräume zur Aufnahme der Behälter bilden. Wenn das Begrenzungselement ein zweites umlaufendes Band ist, können die Hohlraumelemente auch abwechselnd an dem ersten und dem zweiten umlaufenden Band vorgesehen sein. Vorteil dieser Ausführungsform ist die relativ einfache konstruktive Realisierung. Da die einzelnen Hohlraumelemente sich allerdings jeweils über die gesamte Breite des Transporteurs erstrecken, muss zur Bildung der Hohlräume jedes Hohlraumelement über die gesamte Breite des Transporteurs verschwenkt werden. Diese Verschwenkung muss daher sehr schnell erfolgen, oder der Abstand zwischen den einzelnen Behältern muss relativ groß sein, um eine Kollision der Hohlraumelemente mit den zu untersuchenden Behältern zu vermeiden.

In einer weiteren Ausführungsform umfasst die umlaufende Hohlraumbildungseinrichtung zwei umlaufende Bänder, welche jeweils an gegenüberliegenden Seiten des Transporteurs vorgesehen sind und dort jeweils über zwei Umlenkrollen parallel zum Transporteur geführt und mit derselben Geschwindigkeit wie der Transporteur bewegt werden. An beiden umlaufenden Bändern sind Hohlraumelemente angebracht, die jeweils die Form von Halbschalen aufweisen. Die umlaufenden Bänder und die darauf angeordneten Halbschalen sind dabei symmetrisch zueinander ausgeführt, so dass immer zwei gegenüberliegende Halbschalen gleichzeitig über die Transportoberfläche des Transporteurs verschwenkt werden und dabei jeweils einen Behälter vollständig umfassen. Die Halbschalen können grundsätzliche eine beliebige Form aufweisen. Um das Restvolumen der Hohlräume jedoch möglichst klein zu halten, sind die von den Hohlraumelementen gebildeten Hohlräume vorzugsweise an die Dimensionen der zu untersuchenden Behälter angepasst. Da die meisten Behälter zylindrische Form aufweisen, bietet es sich daher an, Halbschalen zu verwenden, die einen zylindrischen Hohlraum bilden mit einem Durchmesser, der nur wenig größer als der Durchmesser der zu untersuchenden Behälter.

In einer weiteren Ausführungsform erfolgt die Behälterinspektion während des Transports der Behälter auf einem Rundläufer. Der Rundläufer bildet in dieser Ausführungsform sowohl die umlaufende Transporteinrichtung, auf der die zu untersuchenden Behälter einreihig und voneinander beabstandet transportiert werden, als auch die dazu parallel angeordnete, umlaufende Hohlraumbildungseinrichtung. Bei Rundläufern ist die reguläre Transportrichtung natürlich nicht geradlinig sondern erfolgt auf einer Kreisbahn. In dieser Ausführung ist damit die reguläre Transportrichtung eine Kreisbahn, und auch hierbei erfolgt die Leckdetektion während die Behälter auf dieser Kreisbahn transportiert werden.

Der Rundläufer umfasst eine kreisförmige Bodenplatte auf der die Behälter transportiert werden. Wie oben erwähnt, ist der Rundläufer gleichzeitig so ausgebildet, dass er auch zumindest einen Teil der umlaufenden Hohlraumbildungseinrichtung bildet. Hierzu weist der Rundläufer ein sternförmiges Einteil-Element mit einer Vielzahl von Ausnehmungen zur Aufnahme jeweils eines Behälters auf. Die Ausnehmungen bilden zusammen mit einem weiteren seitlichen Begrenzungselement die Hohlraumseitenwände.

Das weitere seitliche Begrenzungselement kann zum Beispiel eine stationäre Seitenwand sein, die sich peripher um mindestens einen Teil des Umfangs des Rundläufers zwischen der Aufgabe- und der Abgabeposition des Rundläufers erstreckt. Das weitere seitliche Abdeckungselement ist dabei so ausgeführt, dass es zusammen mit den Seitenwänden der Ausnehmungen des Rundläufers die zu untersuchenden Behälter vollständig umschließt.

Die Bodenplatte des Rundläufers bildet die Bodenwand der Hohlräume. Oberhalb des Rundläufers ist wiederum ein stationäres Abdeckungselement vorgesehen, welches die obere Begrenzung der Hohlräume bildet. Das stationäre Abdeckungselement kann zum Beispiel ein Abdeckblech sein, das sich über einen Teil oder über den gesamten Rundläufer erstreckt. Vorzugsweise erstreckt sich das obere Abdeckelement mindestens über den Bereich des Rundläufers, der auch von dem weiteren seitlichen Begrenzungselement abgedeckt wird.

Das Funktionsprinzip bei dieser Ausführungsform ist im Wesentlichen identisch zu dem der oben beschriebenen Ausführungsform mit geradlinigem Aufbau. Ein Behälter wird zunächst an einer Aufgabeposition einer Ausnehmung des Rundläufers aufgegeben. Der Rundläufer bewegt den Behälter dann weiter in einen Bereich, in dem die Ausnehmung zusammen mit dem seitlichen und dem oberen Begrenzungselement einen im Wesentlichen abgeschlossenen Hohlraum für den zu untersuchenden Behälter bilden. Während des Transports in dem abgeschlossenen Hohlraum kann eventuell austretendes Medium aus dem Druckbehälter in den Hohlraum entweichen und sich dort ansammeln bzw. aufkonzentrieren. Kurz bevor der Behälter aus dem Hohlraum wieder freigegeben wird, wird das Gasgemisch aus dem Hohlraum abgesaugt und einer Messeinrichtung zur Analyse zugeführt.

In einer alternativen Ausführungsform kann das weitere seitliche Begrenzungselement aber auch ein umlaufendes Band sein. Das umlaufende Band kann dabei zum Beispiel über zwei seitlich am Rundläufer vorgesehene Umlenkrollen geführt und sich über den dazwischen liegenden Umfangsabschnitt des Rundläufers erstrecken. Das Band kann dabei mittels der Umlenkrollen so vorgespannt sein, dass es an den Seitenwandbegrenzungen der Ausnehmungen sicher anliegt. Dadurch kann auf sehr einfache Weise eine effektive Abdichtung der Seitenwandbegrenzungen der Ausnehmungen erreicht werden. Zur Rückführung des umlaufenden Bandes können weitere Umlenkrollen um den Rundläufer vorgesehen sein. Das umlaufende Band kann vorteilhafterweise mit einer Geschwindigkeit betrieben werden, die der Umfangsgeschwindigkeit des Rundläufers entspricht, so dass es zu keiner Relativbewegung zwischen dem umlaufenden Band und dem Rundläufer kommt. Durch die Vermeidung einer Relativbewegung kann eine bessere Abdichtung des Hohlraums erzielt und damit eine höhere Messempfindlichkeit erreicht werden.

Das umlaufende Band kann ebenfalls wieder mit Hohlraumelementen versehen sein, die so dimensioniert und so auf dem Band angeordnet sind, dass die Hohlraumelemente, jeweils mit den Ausnehmungen des Rundläufers in Eingriff kommen und dabei Hohlräume für die zu untersuchenden Behälter bilden. Die Hohlraumelemente können dabei eine beliebige Form aufweisen, solange sie eine formschlüssige Anbindung an die Seitenwände der Ausnehmungen des Rundläufers gewährleisten.

Die Inspektionsvorrichtung weist außerdem eine Absaugeinrichtung, zum Absaugen des sich in dem Hohlraum ausbildenden Gasgemisches auf. Die Absaugeinrichtung kann an einer beliebigen, geeigneten Position vorgesehen sein. Vorzugsweise ist die Absaugeinrichtung an einem stationären Element, zum Beispiel an dem stationären oberen Abdeckelement, vorgesehen. Über die Absaugeinrichtung wird das sich in jedem Hohlraum ausbildende Gasgemisch abgesaugt und der Analyseeinrichtung zugeführt. Um die Verweilzeit der Behälter in den Hohlräumen bestmöglich auszunutzen, befindet sich der Absauganschluss der Absaugeinrichtung vorzugsweise am stromabwärts gelegenen Ende der Inspektionsvorrichtung, also kurz bevor die Behälter aus den Hohlräumen wieder freigegeben werden. Der Absauganschluss ist vorzugsweise mit einem steuerbaren Ventil versehen, so dass der Absaugvorgang gezielt für jeden Behälter durchgeführt werden kann.

Zur Analyse der Hohlraumatmosphäre kann grundsätzlich jede geeignete Analyseeinrichtung verwendet werden. Geeignet ist eine Analyseeinrichtung dann, wenn mit ihr hinreichend schnell und mit hinreichendem Auflösungsvermögen, ein kritischer Bestandteil der Atmosphäre detektiert werden kann. Besonders geeignet sind in diesem Zusammenhang zum Beispiel IR-Absorptionsmessgeräte, insbesondere Multipass-IR-Absorptionsmessgeräte wie Herriott-Zellen. Ein Vorteil dieser Messgeräte besteht darin, dass diese bei Atmosphärendruck arbeiten können, so dass das zu untersuchende Gasgemisch ohne weitere Aufbereitung direkt in die Messeinrichtung geleitet werden kann. Dies verringert die insgesamt benötigte Zeitspanne für die Gasanalyse, so dass auch bei hohen Geschwindigkeiten in modernen Abfüll- und Verpackungsanlagen, jeder Behälter ohne Zeitverlust untersucht werden kann.

In einer bevorzugten Ausführungsform weist das stationäre Abdeckelement außerdem einen Spülanschluss auf über den jeder Hohlraum vor Beginn der Leckdetektion mit einem Gas, vorzugsweise einem inerten Gas, und weiter vorzugsweise mit Stickstoff, gespült werden kann. Dadurch wird einerseits erreicht, dass der Luftsauerstoff aus den Hohlräumen nahezu vollständig entfernt wird, so dass selbst bei Austritt eines Treibgases aus den Druckbehältern keine zündfähige Atmosphäre in den Hohlräumen entstehen kann. Andererseits hat das Spülen den zusätzlichen Vorteil, dass dadurch eine definierte Ausgangsatmosphäre geschaffen wird, so dass die Messung unabhängig von gegebenenfalls erhöhten Treibgaskonzentrationen in der Umgebungsluft, z.B. aufgrund von Leckagen an einer benachbarten Linie, durchgeführt werden kann.

In allen Ausführungsformen können die umlaufenden Bänder und die Hohlraumelemente aus beliebigem geeignetem Material gefertigt sein. Vorzugsweise sind die Hohlraumelemente aus Kunststoff oder Leichtmetall hergestellt.

Da zwischen der Hohlraumatmosphäre und der Umgebung kein Druckunterschied besteht, kommt es bei der vorliegenden Erfindung nicht so sehr darauf an, dass die Hohlräume luftdicht abgeschlossen sind. Je geringer aber der Luftaustausch zwischen dem Hohlraum und der Umgebung ist, desto höher wird die Empfindlichkeit der Leckdetektion.

Zur Verbesserung der Abdichtung, können daher zwischen den einzelnen, die Hohlräume bildenden Wandelementen, flexible Dichtungen wie zum Beispiel Gummidichtungen vorgesehen sein. Solche Dichtungen sind insbesondere, zwischen solchen Wandelementen von Vorteil, die aneinander abgleiten, wie zum Beispiel zwischen dem obere Abdeckelement und den darunter vorbeibewegten umlaufenden Bändern oder Hohlraumelemente.

Die vorliegende Erfindung betrifft auch ein System zur Inspektion von Behältern, umfassend eine oben diskutierte Inspektionsvorrichtung, eine Zuführeinrichtung mit einer Einlauf-Beabstandungseinrichtung, mit der die zu untersuchenden Behälter einreihig und voneinander beabstandet der Inspektionsvorrichtung zugeführt werden, und einen Ausstoßer, mit dem undichte Behälter aus dem Behälterstrom ausgesondert werden können.

Schließlich betrifft die vorliegende Erfindung auch ein Verfahren zur Leckdetektion in Druckbehältern. Das Verfahren umfasst die Schritte des Beförderns eines Druckbehälters auf einer umlaufenden Transporteinrichtung, des Erzeugens mindestens eines Hohlraumes, in dem ein Behälter während des Transports durch einen Bereich der Inspektionsvorrichtung aufgenommen ist, des Absaugens des sich in dem Hohlraum ausbildenden Gasgemisches mittels einer Absaugeinrichtung und des Analysierens des abgesaugten Gasgemisches mittels einer Analyseeinrichtung. Die Erzeugung des mindestens einen Hohlraumes erfolgt dabei unter Einsatz einer umlaufenden Hohlraumbildungseinrichtung, mit der zumindest ein Teil der Seitenwand des Hohlraumes gebildet wird. Die umlaufende Hohlraumbildungseinrichtung verläuft dabei parallel zur umlaufenden Transporteinrichtung, auf der die zu untersuchenden Behälter transportiert werden.

Merkmale die im Zusammenhang mit nur einer Ausführungsform beschrieben sind, können jederzeit auch im Zusammenhang mit den anderen Ausführungsformen verwirklicht werden.

Ausführungsbeispiele der Erfindung werden nachfolgend anhand der Zeichnungen erläutert. Es zeigen:
Figur 1 Aufsicht einer Inspektionsvorrichtung mit einer umlaufenden Hohlraumerzeugungseinrichtung mit einseitig angeordneten Hohlraumelementen;
Figur 2 Aufsicht einer Inspektionsvorrichtung gemäß Figur 1 mit einer umlaufenden Hohlraumerzeugungseinrichtung mit beiderseitig angeordneten Hohlraumelementen;
Figur 3 Querschnittsansicht einer Inspektionsvorrichtung gemäß Figur 1;
Figur 4 Aufsicht einer Inspektionsvorrichtung mit Rundläufer und stationärem Seitenelement;
Figur 5 Aufsicht einer Inspektionsvorrichtung mit Rundläufer und beweglichem Seitenelement;
Figur 6 Aufsicht einer Inspektionsvorrichtung gemäß Figur 5 mit Hohlraumelementen ;

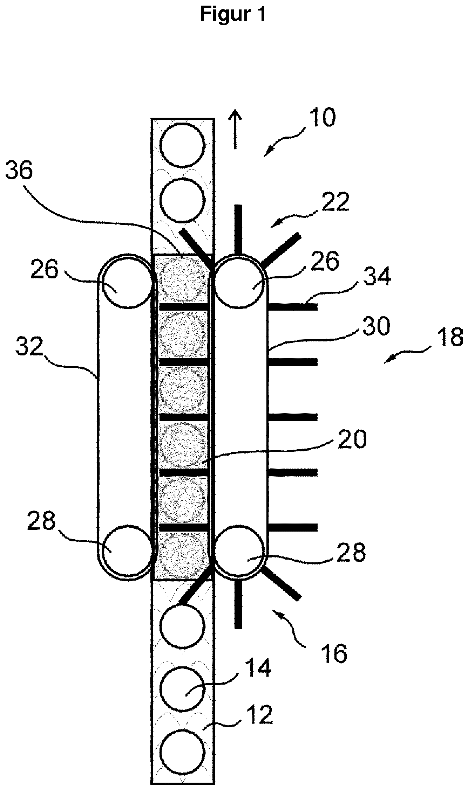

Figur 1 zeigt eine erste Ausführungsform der vorliegenden Erfindung. Die Inspektionsvorrichtung 10 umfasst einen umlaufenden Transporteur 12, auf dem die zu untersuchenden Behälter 14 einreihig und voneinander beabstandet in der durch den Pfeil gekennzeichneten Richtung transportiert werden. Am Eingang 16 der Inspektionsvorrichtung 10 wird mittels einer Vorrichtung 18 ein Hohlraum 20 um jeden einzelnen Behälter 14 herum gebildet.

Jeder Behälter 14 wird innerhalb des jeweiligen Hohlraums 20 durch die Leck-Detektionsvorrichtung 10 transportiert. Am Ausgang 22 der Leck-Detektionsvorrichtung 10 wird das Gasgemisch im Inneren des Hohlraums 20 über eine Absaugeinrichtung (nicht gezeigt) abgesaugt und einer Analyseeinrichtung (nicht gezeigt) zugeführt. Wenn ein Leck detektiert worden ist, wird der entsprechende defekte Behälter 14 stromabwärts der Leck-Detektionsvorrichtung 10 aus dem Behälterstrom ausgesondert.

In dem in Figur 1 gezeigten Ausführungsbeispiel umfasst die Vorrichtung 18 zur Erzeugung der Hohlräume 20 zwei umlaufende Hohlraumbildungseinrichtungen. Die beiden umlaufenden Hohlraumbildungseinrichtungen sind in dieser Ausführungsform zwei umlaufende Bänder 30, 32 die beiderseits des Transporteurs 12 und senkrecht zur Transportebene des Transporteurs 12 angeordnet ist. Die beiden Bänder sind über vordere und hintere Umlenkrollen 26, 28 geführt. Das umlaufende Band 30 weist senkrecht abstehende Hohlraumelemente 34 auf, deren Länge dem Abstand zwischen den beiden umlaufenden Bändern 30, 32 entspricht. Die umlaufenden Bänder 30, 32 sind selbst aus luftundurchlässigem Material hergestellt und bilden die lateralen Seitenwände der Hohlräume 20. Die Hohlraumelemente 34 bilden jeweils die vorderen bzw. hinteren Seitenwände der Hohlräume 20.

Der Boden der Hohlräume 20, in denen die zu untersuchenden Behälter 14 transportiert werden, von der Transportfläche des Transporteurs 12 gebildet. Die obere Abdeckung der Hohlräume 20 wird von einem Abdeckelement 36 gebildet. Das Abdeckelement ist in diesem Fall ein Abdeckblech, das sich über die Länge der Vorrichtung 18 zur Hohlraumerzeugung erstreckt.

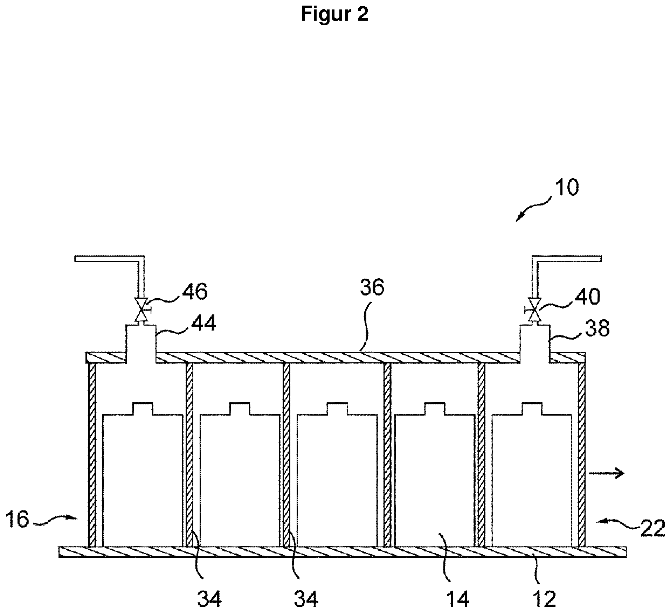

In Figur 2 ist ein Querschnitt eines Abschnitts der Inspektionsvorrichtung abgebildet. Zwischen den auf dem Transporteur 12 geförderten Behälters 14 sind durch die Hohlraumelemente 34 einzelne Hohlräume gebildet, die unter dem stationären Abdeckelement 36 hindurchbewegt werden. Kurz bevor die Behälter wieder aus den Hohlräumen 20 freigegeben werden, wird am Ausgang 22 der Inspektionsvorrichtung 10 wird, ein Teil der sich in dem Hohlraum befindliche Atmosphäre mittels einer Absaugeinrichtung über einen Auslass 38, der mit einem Ventil 40 versehen ist, abgesaugt.

Die Probe wird anschließend in eine Messzelle eines IR-Spektrometers (nicht abgebildet) geleitet und dort analysiert. Wenn bei dieser Analyse Inhaltsstoffe der Behälter 14, insbesondere Treibgase, in einer unzulässig hohen Konzentration detektiert werden, so wird der entsprechende Behälter 14 aus dem Behälterstrom entfernt. Wenn dabei sogar festgestellt wird, dass eine akute Gefahr bestehen könnte, dass sich eine explosionsfähige Atmosphäre in der Abfüllvorrichtung entwickelt, so können zusätzlich geeignete Maßnahmen ergriffen werden, um eine mögliche Gefahrensituation zu vermeiden oder zu bereinigen.

Als weitere Maßnahme zur Vermeidung der Entwicklung eines zündfähigen Gemisches innerhalb der Hohlräume 20, kann des Weiteren vorgesehen werden, dass die einzelnen Hohlräume 20 eingangs der Inspektionsvorrichtung 10 mit einem inerten Gas z.B. mit Stickstoff gespült werden. Hierzu kann, wie in Figur 2 gezeigt, das obere Abdeckelement 36 einen Spüleinlass 44 mit einem steuerbaren Ventil 46 aufweisen. Über das steuerbare Ventil 46 kann dann jeder Hohlraum 20 zunächst mit Stickstoff gespült werden, so dass zunächst eine nahezu sauerstofffreie Atmosphäre innerhalb eines jeden Hohlraumes 20 erzeugt wird. Auf diese Weise wird aber nicht nur der Sauerstoff entfernt, sondern es wird auch eine wohldefinierte Ausgangsatmosphäre in den Hohlräumen 20 erzeugt, so dass die LeckDetektion unabhängig von eventuellen Treibgaskonzentrationen in der Umgebungsluft durchgeführt werden kann. Dies ist insbesondere dann von Vorteil, wenn z.B. aufgrund eines Lecks an einer benachbarten Produktionslinie, eine erhöhte Konzentration von Treibgasen in der Umgebung der Inspektionsvorrichtung 10 auftritt.

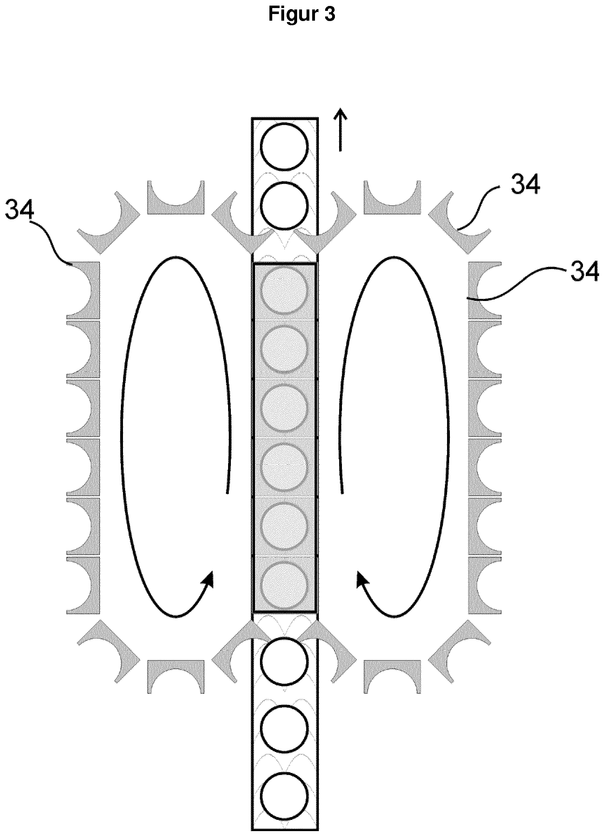

Figur 3 zeigt eine weitere Ausführungsform der vorliegenden Erfindung, wobei die Vorrichtung zur Erzeugung der Hohlräume 20 ebenfalls zwei umlaufende Bänder 30, 32 umfasst. Im Unterschied zu der Ausführungsform von Figur 1 weisen in diesem Fall jedoch beide umlaufende Bänder Hohlraumelemente 34 auf. Die Hohlraumelemente 34 sind in dieser Ausführungsform Halbschalen, die symmetrisch zueinander an den umlaufenden Bändern befestigt sind. Die umlaufenden Bänder 30, 32 sind dabei so ausgeführt, dass jeweils zwei gegenüberliegende Halbschalen im Bereich des Transporteurs 12 gegenüber zu liegen kommen und dabei jeweils einen Hohlraum 20 bilden, in dem jeweils einer der zu untersuchenden Behälter 14 eingeschlossen ist.

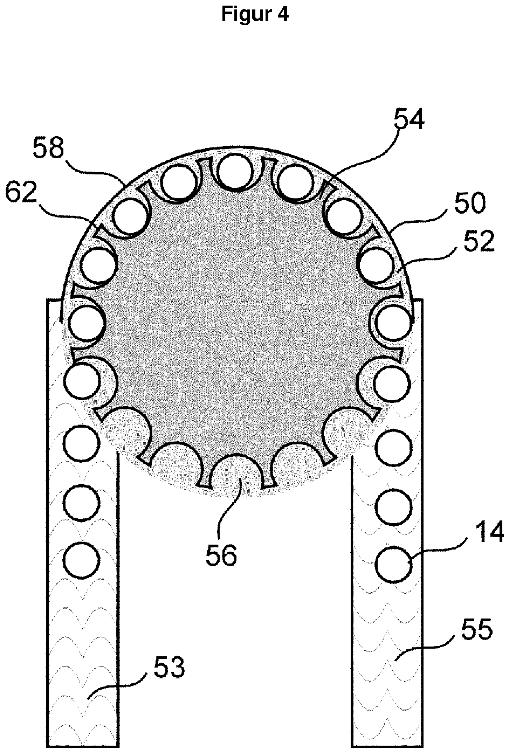

Die in den Figuren 4 bis 6 dargestellten Ausführungsformen betreffen eine Konstruktion der Inspektionseinrichtung, bei der der umlaufenden Transporteureinen Rundläufer 50 umfasst. Der Rundläufer 50 ist im Wesentlichen eine rotierende Plattform 52 mit einem sogenannten Einteilstern 54. Der Einteilstern weist an seinem Umfang eine Vielzahl von Ausnehmungen 56 auf, in denen die zu untersuchenden Behälter 14 aufgenommen werden können. Der Einteilstern bildet in dieser Ausführungsform die umlaufende Hohlraumbildungseinrichtung.

In den Ausführungsformen gemäß Figuren 4 bis 6 werden die Behälter über einen linearen Transporteur 53 einreihig und voneinander beabstandet dem Rundläufer 50 an einer Aufgabeposition aufgegeben. Am Ausgang der Inspektionseinrichtung 10 werden die Behälter 14 an einer Abgabeposition von einem weiteren linearen Transporteur 55 aufgenommen und abgefördet. Es können selbstverständlich beliebige andere, geeignete Zu- und Abförderer eingesetzt werden.

Die Seitenwände der Hohlräume 20 werden von den Seitenwänden 60 der Ausnehmungen 56 zusammen mit einem seitlichen Begrenzungselement gebildet. In der in Figur 4 gezeigten Ausführungsform werden ist das Begrenzungselement ein stationäres Begrenzungsblech 58, das sich um einen Umfangsabschnitt des Rundläufers 50 zwischen der Aufgabeposition und der Abgabeposition des Rundläufers 50 erstreckt.

Zwischen dem stationären Begrenzungsblech 58 und den Seitenwänden 60 der Ausnehmungen 56 des Rundläufers 50 ist ein kleiner Spalt 62 gebildet, so dass eine im Wesentlichen reibungsfreie Rotation des Rundläufers 50 möglich ist. Um dennoch einen ausreichenden Luftabschluss zu erreichen, können an den Seitenwänden 60 der Ausnehmungen 56 elastische Dichtelemente vorgesehen sein. Dies können zum Beispiel Bürsten oder Gummielemente sein.

Den oberen Abschluss der Hohlräume 20 bildet wieder ein ortsfestes Abdeckblech 36 (nicht gezeigt in Figuren 4 bis 6), wobei auch hier wieder Dichtelemente zwischen dem ortsfesten Abdeckblech 36 und dem darunter rotierenden Rundläufer 50 vorgesehen sein können.

Im Bereich der Abgabeposition des Rundläufers 50, also kurz bevor die Behälter 14 wieder aus dem jeweiligen Hohlraum 20 freigegeben werden, ist wiederum eine Absaugvorrichtung (nicht gezeigt) vorgesehen, mit der zumindest ein Teil der sich in dem Hohlraum 20 entwickelnde Atmosphäre über eine Absaugeinrichtung (nicht gezeigt) abgesaugt und einer Analyseeinrichtung (nicht gezeigt) zugeführt wird.

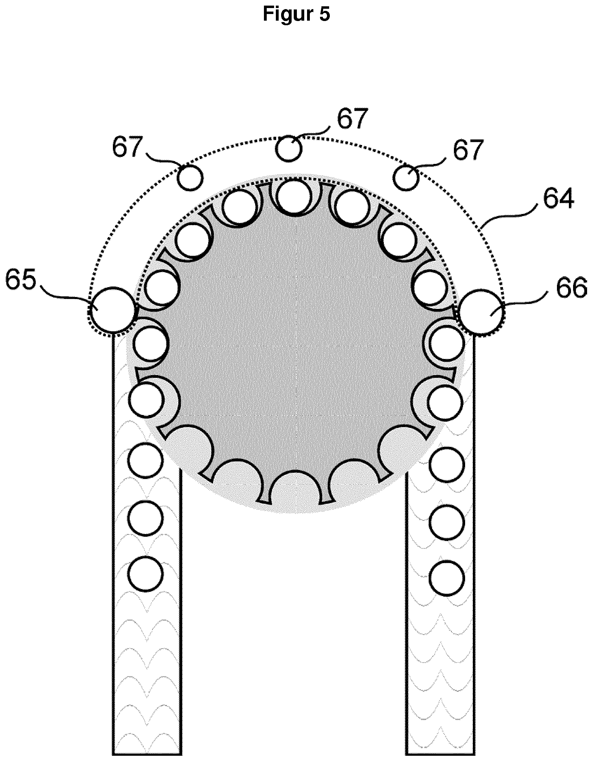

Wie in Figur 5 abgebildet, kann anstatt eines ortsfesten Begrenzungselements 58 auch ein umlaufendes Band 64 vorgesehen sein, welches an der Außenseite des Rundläufers 50 entlanggeführt wird und welches eine laterale Abdichtung der Hohlräume des Rundläufers 50 ermöglicht. Das umlaufende Band 64 wird hierzu über mehrere Umlenkrollen 65, 66, 67, die an der Peripherie des Rundläufers 50 angeordnet sind geführt.

Wenn das umlaufende Band 64 eine Geschwindigkeit aufweist, die der Umfangsgeschwindigkeit des Rundläufers 50 entspricht, wird eine Relativbewegung zwischen dem Rundläufer 50 und dem umlaufenden Band 64 vermieden. Das umlaufende Band 64 kann somit in direktem Kontakt mit den Seitenwänden 62 der Ausnehmungen 56 des Rundläufers 50 gebracht werden und dadurch für eine sehr effektive Abdichtung der Hohlräume 20 sorgen.

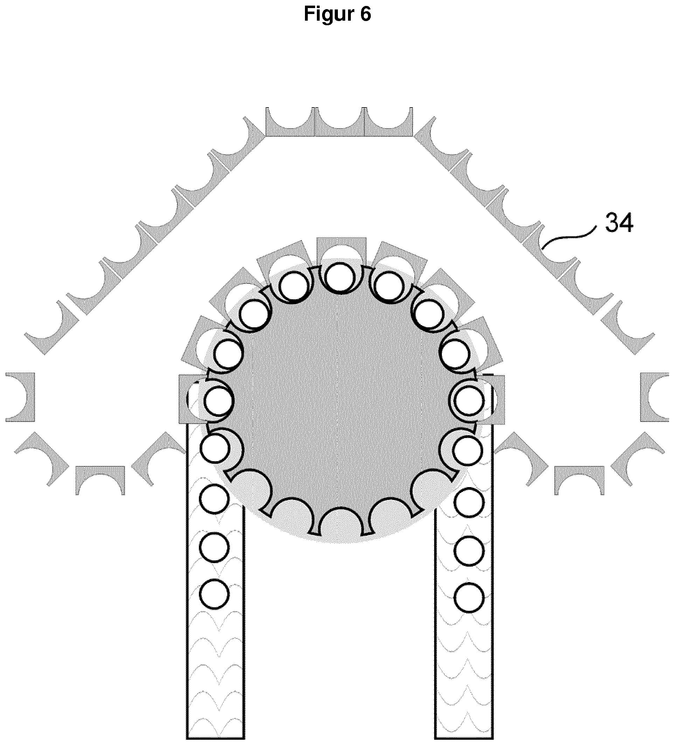

In einer weiteren Ausführungsform kann das umlaufende Band 64, wie in Figur 6 dargestellt, zusätzlich mit Hohlraumelementen 34 wie zum Beispiel mit Halbschalen versehen sein. Die Halbschalen sind dabei so dimensioniert und das Band 64 wird dabei so bewegt, dass die Halbschalen 34 mit jeweils einer Ausnehmung 56 des Rundläufers 50 zusammentreffen und dabei zusammen mit den Seitenwänden 62 der Ausnehmungen 56 des Rundläufers 50 Hohlräume 20 zur Aufnahme jeweils eines Behälters 20 bilden.

## Patentansprüche

1. Inspektionsvorrichtung (10) zum Detektieren von Leckagen von Druckbehältern, umfassend
eine umlaufende Transporteinrichtung (12), auf der die zu untersuchenden Behälter (14) einreihig und voneinander beabstandet durch die Inspektionsvorrichtung (10) transportiert werden,
eine Vorrichtung (18) zur Erzeugung mindestens eines Hohlraumes (20), in dem ein Behälter (14) während des Transports auf der umlaufenden Transporteinrichtung (12) durch einen Bereich der Inspektionsvorrichtung (10) aufgenommen ist,
eine Absaugeinrichtung, zum Absaugen des sich in dem Hohlraum (20) ausbildenden Gasgemisches, und
eine Analyseeinrichtung, mit der das abgesaugte Gasgemisch analysiert wird, wobei
die Vorrichtung (18) zur Erzeugung des mindestens einen Hohlraumes (20), eine umlaufende Hohlraumbildungseinrichtung umfasst, mit der zumindest ein Teil der Seitenwand des Hohlraumes (20) gebildet wird, **dadurch gekennzeichnet,**
**dass** die umlaufende Hohlraumbildungseinrichtung parallel zur umlaufenden Transporteinrichtung (12) verläuft, auf der die zu untersuchenden Behälter (14) durch die Inspektionsvorrichtung (10) transportiert werden, wobei die umlaufende Hohlraumbildungseinrichtung dazu eingerichtet ist, den um den Behälter herum gebildeten Hohlraum während des Transports des Behälters (14) auf der Transporteinrichtung (12) mit dem Behälter mitzubewegen.

2. Vorrichtung gemäß Anspruch 1, wobei die Vorrichtung (18) zur Erzeugung des mindestens einen Hohlraumes (20) ein stationäres Abdeckelement (36) umfasst, welches die obere Abdeckung des mindestens einen Hohlraums (20) bildet.

3. Vorrichtung gemäß Anspruch 2, wobei das stationäre Abdeckelement (36) einen Absauganschluss (38) umfasst, über den die Absaugeinrichtung das sich in jedem Hohlraum (20) ausbildende Gasgemisch, absaugen und der Analyseeinrichtung zuführen kann.

4. Vorrichtung gemäß einem der Ansprüche 1 bis 3, wobei die umlaufende Hohlraumbildungseinrichtung ein umlaufendes Band (30) umfasst, an dem mindestens ein Hohlraumelement (34) angebracht ist, wobei das mindestens eine umlaufende Band (30) seitlich der Transporteinrichtung (12) angeordnet ist.

5. Vorrichtung gemäß Anspruch 4, wobei die umlaufende Hohlraumbildungseinrichtung zwei umlaufende Bänder (30, 32) umfasst, die beiderseitig der Transporteinrichtung (12) vorgesehen sind,
wobei an jedem Band (30, 32) mindestens ein Hohlraumelement (34) angebracht ist, und
wobei die beiden Hohlraumelemente (34) so ausgeführt sind, dass die beiden Hohlraumelemente (34) miteinander in Eingriff gebracht werden können und dabei einen Hohlraum (20) bilden in dem ein Behälter (14) vollständig aufgenommen ist.

6. Vorrichtung gemäß Anspruch 5, wobei die Hohlraumelemente (34) jeweils Halbschalen sind, die jeweils eine Hälfte der Hohlraumseitenwände darstellen.

7. Vorrichtung gemäß einem der Ansprüche 1 bis 3, wobei die umlaufende Hohlraumbildungseinrichtung ein Rundläufer (50) ist, welches eine Vielzahl von Ausnehmungen (56) zur Aufnahme jeweils eines Behälters (14) aufweist, und wobei ein weiteres seitliches Begrenzungselement (58) vorgesehen ist, welches zusammen mit den Ausnehmungen (56) die jeweiligen Hohlraumseitenwände bildet.

8. Vorrichtung gemäß Anspruch 7, wobei das zusätzliche seitliche Begrenzungselement ein stationäres Wandelement (58) ist welches sich peripher um mindestens einen Teil des Umfangs des Rundläufers (50) erstreckt.

9. Vorrichtung gemäß Anspruch 7, wobei das zusätzliche seitliche Begrenzungselement ein umlaufendes Band (64) ist welches sich peripher um mindestens einen Teil des Umfangs des Rundläufers (50) erstreckt, und welches eine Umlaufgeschwindigkeit aufweist, die der Umfangsgeschwindigkeit des Rundläufers (50) entspricht.

10. Vorrichtung gemäß einem der vorhergehenden Ansprüche, wobei das stationäre Abdeckelement (36) einen Spülanschluss (44) umfasst, über den jeder Hohlraum (20) vor Beginn der Leckdetektion mit einem Gas, vorzugsweise einem inerten Gas, und weiter vorzugsweise mit Stickstoff, gespült werden kann.

11. Vorrichtung gemäß einem der vorhergehenden Ansprüche, wobei die Analyseeinrichtung eine Multipass-IR-Absorptionsmessgerät oder eine Herriott-Zelle ist.

12. System zur Inspektion von Behältern (14), umfassend:
eine Inspektionsvorrichtung (10) gemäß einem der Ansprüche 1 bis 11,
eine Zuführeinrichtung mit einer Einlauf-Abstandsvorrichtung, mit der die zu untersuchenden Behälter einreihig und voneinander beabstandet der Inspektionsvorrichtung zugeführt werden, und
einen Ausstoßer, mit dem undichte Behälter aus dem Behälterstrom ausgesondert werden können.

13. Verfahren zur Detektion von Leckagen in Druckbehältern, umfassend die Schritte:
- Befördern von einreihig angeordneten und voneinander beabstandeten Druckbehältern auf einer umlaufenden Transporteinrichtung (12) durch eine Inspektionsvorrichtung (10);
- Erzeugen mindestens eines Hohlraumes (20), in dem ein Behälter (14) während des Transports auf der umlaufenden Transporteinrichtung (12) durch einen Bereich der Inspektionsvorrichtung (10) aufgenommen ist,
- Absaugen des sich in dem Hohlraum (20) ausbildenden Gasgemisches mittels einer Absaugeinrichtung; und
- Analysieren des abgesaugten Gasgemisches mittels einer Analyseeinrichtung; wobei
- zur Erzeugung des mindestens einen Hohlraumes (20), eine umlaufende Hohlraumbildungseinrichtung eingesetzt wird, mit der zumindest ein Teil der Seitenwand des Hohlraumes (20) gebildet wird, **dadurch gekennzeichnet, dass** die umlaufende Hohlraumbildungseinrichtung parallel zur umlaufenden Transporteinrichtung verläuft, auf der die zu untersuchenden Behälter durch die Inspektionsvorrichtung transportiert werden, wobei die umlaufende Hohlraumbildungseinrichtung dazu eingerichtet ist, den um den Behälter herum gebildeten Hohlraum während des Transports des Behälters (14) auf der Transporteinrichtung (12) mit dem Behälter mitzubewegen.

## Claims

1. Inspection device (10) for detecting leaks from pressure containers, comprising
a circulating transport device (12) on which the containers (14) to be inspected are transported through the inspection device (10) in a single row and spaced apart from one another,
a device (18) for forming at least one cavity (20) in which a container (14) is received during transport on the circulating transport device (12) through a region of the inspection device (10),
an suction device for sucking off the gas mixture forming in the cavity (20), and
an analysis device with which the sucked-off gas mixture is analysed,
wherein
the device (18) for forming the at least one cavity (20) comprises a circulating cavity forming device with which at least a part of the side wall of the cavity (20) is formed, **characterized in**
**that** the circulating cavity forming device runs parallel to the circulating transport device (12) on which the containers (14) to be inspected are transported through the inspection device (10), wherein the circulating cavity forming device is arranged to move the cavity formed around the container along with the container during the transport of the container (14) on the transport device (12).

2. Device according to claim 1, wherein the device (18) for forming the at least one cavity (20) comprises a stationary cover element (36) which forms the upper cover of the at least one cavity (20).

3. Device according to claim 2, wherein the stationary cover element (36) comprises a suction connection (38) via which the suction device can suck off the gas mixture forming in each cavity (20) and feed it to the analysis device.

4. Device according to one of claims 1 to 3, wherein the circulating cavity forming device comprises a circulating belt (30) to which at least one cavity element (34) is attached, wherein the at least one circulating belt (30) is arranged laterally of the transport device (12).

5. Device according to claim 4, wherein the circulating cavity forming device comprises two circulating belts (30, 32) which are provided on both sides of the transport device (12),
wherein at least one cavity element (34) is attached to each belt (30, 32), and
wherein both cavity elements (34) are constructed in such a way that both cavity elements (34) can be engaged with one another and thereby form a cavity (20) in which a container (14) is completely received.

6. Device according to claim 5, wherein the cavity elements (34) are each half-shells, each representing one half of the cavity side walls.

7. Device according to one of claims 1 to 3, wherein the circulating cavity forming device is a rotary device (50) which has a plurality of recesses (56) for receiving one container (14) each, and wherein a further lateral boundary element (58) is provided which, together with the recesses (56), forms the respective cavity side walls.

8. Device according to claim 7, wherein the additional lateral boundary element is a stationary wall element (58) which extends peripherally around at least a part of the circumference of the rotary device (50).

9. Device according to claim 7, wherein the additional lateral boundary element is a circulating belt (64) which extends peripherally around at least a part of the circumference of the rotary device (50) and which has a circulating speed which corresponds to the circumferential speed of the rotary device (50).

10. Device according to one of the preceding claims, wherein the stationary cover element (36) comprises a flushing connection (44) via which each cavity (20) can be flushed with a gas, preferably an inert gas, and more preferably with nitrogen, before the start of leak detection.

11. Device according to any of the preceding claims, wherein the analysis device is a multipass IR absorption meter or a Herriott cell.

12. A system for inspecting containers (14), comprising:
an inspection device (10) according to any one of claims 1 to 11,
a feeding device with an infeed spacing device with which the containers to be inspected are fed to the inspection device in a single row and spaced apart from each other, and
an ejector with which leaking containers can be separated from the container flow.

13. A method for detecting leaks in pressure containers, comprising the steps
- conveying pressure containers arranged in a single row and spaced apart from one another on a circulating transport device (12) through an inspection device (10);
- forming at least one cavity (20) in which a container (14) is received during transport on the circulating transport device (12) through a region of the inspection device (10),
- sucking off the gas mixture forming in the cavity (20) by means of a suction device; and
- analysing of the sucked off gas mixture by means of an analysis device; wherein
- for forming the at least one cavity (20), a circulating cavity forming device is used, with which at least part of the side wall of the cavity (20) is formed, **characterised in**
**that** the circulating cavity forming device runs parallel to the circulating transport device on which the containers to be inspected are transported through the inspection device, wherein the circulating cavity forming device is arranged to move the cavity formed around the container along with the container during the transport of the container (14) on the transport device (12).

## Revendications

1. Dispositif d'inspection (10) servant à détecter des fuites en provenance de récipients sous pression, comportant
une bande transporteuse de circulation (12), sur laquelle les récipients (14) destinés à être examinés sont transportés au travers du dispositif d'inspection (10) en une seule rangée et espacés les uns par rapport aux autres,
un dispositif (18) servant à produire au moins un vide (20), dans lequel un récipient (14) est reçu en cours de transport sur la bande transporteuse de circulation (12) au travers d'une région du dispositif d'inspection (10),
un dispositif d'aspiration servant à extraire le mélange gazeux se formant dans le vide (20), et
un dispositif d'analyse, au moyen duquel le mélange gazeux extrait est analysé,
dans lequel le dispositif (18) servant à produire ledit au moins un vide (20) comporte un dispositif de circulation formant un vide, au moyen duquel au moins une partie de la paroi latérale du vide (20) est formée, **caractérisé en ce que**
le dispositif de circulation formant un vide avance de manière parallèle par rapport à la bande transporteuse de circulation (12), sur laquelle les récipients (14) destinés à être examinés sont transportés au travers du dispositif d'inspection (10), dans lequel le dispositif de circulation formant un vide est réglé pour déplacer le vide formé autour du récipient avec le récipient au cours du transport du récipient (14) sur la bande transporteuse (12).

2. Dispositif selon la revendication 1, dans lequel le dispositif (18) servant à produire ledit au moins un vide (20) comporte un élément fixe formant couvercle (36), qui forme la couverture supérieure dudit au moins un vide (20).

3. Dispositif selon la revendication 2, dans lequel l'élément fixe formant couvercle (36) comporte un raccord d'aspiration (38), par le biais duquel le dispositif d'aspiration peut extraire le mélange gazeux se formant dans chaque vide (20) et le fournir au dispositif d'analyse.

4. Dispositif selon l'une quelconque des revendications 1 à 3, dans lequel le dispositif de circulation formant un vide comporte une courroie de circulation (30), à laquelle au moins un élément formant vide (34) est attaché, dans lequel ladite au moins une courroie de circulation (30) est agencée sur le côté de la bande transporteuse (12).

5. Dispositif selon la revendication 4, dans lequel le dispositif de circulation formant un vide comporte deux courroies de circulation (30, 32), qui sont mises en oeuvre de chaque côté de la bande transporteuse (12),
dans lequel au moins un élément formant vide (34) est attaché à chaque courroie (30, 32), et
dans lequel les deux éléments formant vide (34) sont conçus de telle sorte que les deux éléments formant vide (34) peuvent être engrenés l'un par rapport à l'autre et ce faisant peuvent former un vide (20), dans lequel un récipient (14) est entièrement reçu.

6. Dispositif selon la revendication 5, dans lequel les éléments formant vide (34) sont dans chaque cas des demi-coques, qui dans chaque cas représentent la moitié des parois latérales du vide.

7. Dispositif selon l'une quelconque des revendications 1 à 3, dans lequel le dispositif de circulation formant un vide est une machine de type carrousel (50), qui a une pluralité d'évidements (56) pour recevoir dans chaque cas un récipient (14), et dans lequel un autre élément de limitation latérale (58) est mis en oeuvre, qui, avec les évidements (56), forme les parois latérales respectives du vide.

8. Dispositif selon la revendication 7, dans lequel l'élément supplémentaire de limitation latérale est un élément fixe formant paroi (58), qui s'étend dans le sens de la périphérie autour d'au moins une partie du périmètre de la machine de type carrousel (50).

9. Dispositif selon la revendication 7, dans lequel l'élément supplémentaire de limitation latérale est une courroie de circulation (64), qui s'étend dans le sens de la périphérie autour d'au moins une partie du périmètre de la machine de type carrousel (50), et qui a une vitesse de circulation qui correspond à la vitesse périphérique de la machine de type carrousel (50).

10. Dispositif selon l'une quelconque des revendications précédentes, dans lequel l'élément fixe formant couvercle (36) comporte un raccord de vidange (44), par le biais duquel chaque vide (20) peut être vidangé au moyen d'un gaz, de préférence un gaz inerte, et par ailleurs de préférence au moyen d'azote, avant le démarrage de la détection de fuite.

11. Dispositif selon l'une quelconque des revendications précédentes, dans lequel le dispositif d'analyse est un dispositif de mesure par absorption IR du type multipassages ou une cellule d'Herriott.

12. Système d'inspection de récipients (14), comportant :
un dispositif d'inspection (10) selon l'une quelconque des revendications 1 à 11,
un dispositif d'alimentation avec un dispositif d'espacement d'alimentation, au moyen duquel les récipients destinés à être examinés sont fournis au dispositif d'inspection en une seule rangée et espacés les uns par rapport aux autres, et
un éjecteur, au moyen duquel les récipients qui fuient peuvent être séparés hors du flux de récipients.

13. Procédé servant à détecter des fuites dans des récipients sous pression, comportant les étapes consistant à :
- transporter des récipients sous pression agencés en une seule rangée et espacés les uns par rapport aux autres sur une bande transporteuse de circulation (12) au travers d'un dispositif d'inspection (10) ;
- produire au moins un vide (20), dans lequel un récipient (14) est reçu en cours de transport sur la bande transporteuse de circulation (12) au travers d'une région du dispositif d'inspection (10),
- extraire le mélange gazeux se formant dans le vide (20) au moyen d'un dispositif d'aspiration ; et
- analyser le mélange gazeux extrait au moyen d'un dispositif d'analyse ;
dans lequel
- un dispositif de circulation formant un vide, au moyen duquel au moins une partie de la paroi latérale du vide (20) est formée, est utilisé pour produire ledit au moins un vide (20), **caractérisé en ce que**
le dispositif de circulation formant un vide avance de manière parallèle par rapport à la bande transporteuse de circulation, sur laquelle les récipients destinés à être examinés sont transportés au travers du dispositif d'inspection, dans lequel le dispositif de circulation formant un vide est réglé pour déplacer le vide formé autour du récipient avec le récipient au cours du transport du récipient (14) sur la bande transporteuse (12).
